# EUROPEAN PATENT APPLICATION

(11) **EP 3 944 447 A1**
(43) Date of publication of application: **26.01.2022**
(21) Application number: 20773981.4
(22) Date of filing: 07.02.2020
(51) Int. Cl.: H02J 3/00, H02J 3/38

(54) **FLEXIBLE ACCESS SUBSTATION AND CONTROL METHOD THEREFOR**

(30) Priority: 20.03.2019 CN 201910212371
(71) Applicant: NR ELECTRIC CO., LTD., Jiangning Nanjing, Jiangsu 211102 (CN); NR Engineering Co., Ltd., Nanjing, Jiangsu 211102 (CN)
(72) Inventor: XIE, Yeyuan, Nanjing, Jiangsu 211102 (CN); WANG, Yu, Nanjing, Jiangsu 211102 (CN); SHENG, Xiaodong, Nanjing, Jiangsu 211102 (CN); YANG, Xingchen, Nanjing, Jiangsu 211102 (CN); YUAN, Qingwei, Nanjing, Jiangsu 211102 (CN)
(74) Representative: Kurig, Thomas
(86) International application number: PCT/CN2020/074539
(87) International publication number: WO 2020/186936

(57) **Abstract**

The application discloses a flexible access substation. The flexible access substation comprises N sets of frequency conversion access systems, wherein N is an integer greater than or equal to 1, and each of the N sets of frequency conversion access system comprises a first AC-DC-AC converter, a first output circuit breaker and a first power distribution system; and the first power distribution system comprises an AC incoming line, an AC bus and at least one outgoing line, and an output side of the AC-DC-AC converter is connected to one end of the AC incoming line of the first power distribution system by means of the first output circuit breaker. The application also discloses a control method for the flexible access substation, which allows a set of converters to be simultaneously accessed to vessels in a plurality of berths, so that a docking vessel can access a shore power in a plug-and-play manner, reducing the investment cost of a shore power device, and improving the convenience of accessing the shore power. In an interconnection mode, mutual support between AC buses can be implemented with high reliability.

## Description

### Technical Field

The application relates to a flexible access substation and a control method, and belongs to the technical field of high-power power electronics.

### Background

The shore power access technology refers to power supply by land power rather than generators on vessels during port calls. A shore power converter/AC-DC-AC converter is the core of a frequency conversion access system, and is responsible for converting a 50 HZ AC supply on shore to a 60 HZ AC supply required by vessels by means of AC-DC-AC frequency conversion. In the prior art, there is a one-to-one relationship between shore power converters and power supply berths.

### Summary

The application introduces an architecture of a power system substation into a shore power system, and provides a flexible access substation and a control method thereof, enabling a one-to-many power supply mode and improving the utilization ratio of the system and equipment.

In order to achieve the above purpose, the application adopts the following technical solution.

A flexible access substation comprises N sets of frequency conversion access systems, N is an integer greater than or equal to 1, each sets of frequency conversion access systems comprises a first AC-DC-AC converter, a first output circuit breaker and a first power distribution system, and the first power distribution system comprises an AC incoming line, an AC bus and at least one outgoing line, wherein

An output side of the first AC-DC-AC converter is connected to one end of the AC incoming line of the first power distribution system by means of the first output circuit breaker;

Another end of the AC incoming line is connected to the AC bus;

One end of each outgoing line is connected to the AC bus, another end is connected to one end of an outgoing circuit breaker, and another end of the outgoing circuit breaker is led out and defined as an outgoing terminal;

An input side of the first AC-DC-AC convert is connected to a superior power grid; and

The first AC-DC-AC convert converts an input AC to a DC, and then converts the DC to an output AC, and the frequency and voltage of the output AC are adjustable.

Further, the frequency conversion access system comprises one first AC-DC-AC converter, one output transformer, M output circuit breakers and M first power distribution systems, wherein a primary side of the output transformer is connected to an output side of the first AC-DC-AC converter, the output transformer comprises M secondary sides, M is an integer greater than or equal to 1, an M^{th} secondary side is connected to one end of an M^{th} output circuit breaker, and another end of the M^{th} output circuit breaker is connected to an AC incoming line of a corresponding first power distribution system.

Further, positive and negative poles of a DC side of the first AC-DC-AC converter are led out and connected to a DC distribution network, and a DC distribution network comprises a DC circuit breaker, a DC transformer, and a DC load, a power supply or a vessel.

Further, the frequency conversion access system further comprises an energy storage unit, and the DC side of the first AC-DC-AC converter is connected to the energy storage unit.

Further, an input transformer is connected between the first AC-DC-AC converter and the superior power grid.

Further, an input circuit breaker is connected between the first AC-DC-AC converter and the superior power grid.

Further, the outgoing terminal is connected to a vessel, and the outgoing circuit breaker is equipped with a synchronizing device.

Further, N is equal to 2, each of the first frequency conversion access system and the second frequency conversion access system comprises a second output circuit breaker, one end of the second output circuit breaker of the first frequency conversion access system is connected to the output side of the first AC-DC-AC converter of the first frequency conversion access system, and another end is connected to the AC bus of the second frequency conversion access system; and one end of the second output circuit breaker of the second frequency conversion access system is connected to the output side of the first AC-DC-AC converter of the second frequency conversion access system, and another end is connected to the AC bus of the first frequency conversion access system.

Further, N is an integer greater than or equal to 2, the flexible access substation further comprises N-1 connection modules, and the AC buses of the N sets of frequency conversion access systems are connected hand in hand by means of the N-1 connection modules.

Further, the connection module comprises the first AC-DC-AC converter of the N^{th} frequency conversion access system, the first AC-DC-AC converter of the N^{th} frequency conversion access system converts an input AC to a DC and then converts the DC to an output AC, and frequency and voltage of the input and output AC are adjustable.

Further, the connection module comprises a solid-state switch composed of power semiconductor devices or a mechanical switch.
The application also provides a control method of a flexible access substation. The flexible access substation comprises N sets of frequency conversion access systems, N is an integer greater than or equal to 2, each of the N sets of frequency conversion access systems comprises a first AC-DC-AC converter, a first output circuit breaker, a first power distribution system and N-1 connection modules, the first power distribution system comprises an AC incoming line, an AC bus and at least one outgoing line, and the AC buses of the N sets of frequency conversion access systems are connected hand in hand by means of the N-1 connection modules, wherein,
An output side of the first AC-DC-AC converter is connected to one end of the AC incoming line of the first power distribution system by means of the first output circuit breaker;
Another end of the AC incoming line is connected to the AC bus;
One end of each outgoing line is connected to the AC bus, another end of each outgoing line is connected to one end of an outgoing circuit breaker, and another end of the outgoing circuit breaker is led out and defined as an outgoing terminal;
An input side of the first AC-DC-AC convert is connected to a superior power grid;
The first AC-DC-AC convert converts an input AC to a DC, and then converts the DC to an output AC, and the frequency and voltage of the output AC are adjustable; and
The connection module comprises the first AC-DC-AC converter of the N^{th} frequency conversion access system, the first AC-DC-AC converter of the N^{th} frequency conversion access system converts an input AC to a DC and then converts the DC to an output AC, and frequency and voltage of the input and output AC are adjustable.

Wherein, the control method of the flexible access substation comprises: when output of the first AC-DC-AC converter of the N^{th} frequency conversion access system is overloaded, controlling, by the AC-DC-AC converter of the (N-1)^{th} frequency conversion system and/or the (N+1)^{th} frequency conversion system, a power direction to flow from the AC bus of an adjacent frequency conversion access system to an overloaded bus.
The application further provides another control method of a flexible access substation. The flexible access substation comprises N sets of frequency conversion access systems, N is an integer greater than or equal to 2, each of the N sets of frequency conversion access systems comprises a first AC-DC-AC converter, a first output circuit breaker, a first power distribution system and N-1 connection modules, the first power distribution system comprises an AC incoming line, an AC bus and at least one outgoing line, and the AC buses of the N sets of frequency conversion access systems are connected hand in hand by means of the N-1 connection modules, wherein,
On output side of the first AC-DC-AC converter is connected to one end of the AC incoming line of the first power distribution system by means of the first output circuit breaker;
Another end of the AC incoming line is connected to the AC bus;
One end of each outgoing line is connected to the AC bus, another end of each outgoing line is connected to one end of an outgoing circuit breaker, and another end of the outgoing circuit breaker is led out and defined as an outgoing terminal;
An input side of the first AC-DC-AC convert is connected to a superior power grid;
The first AC-DC-AC convert converts an input AC to a DC, and then converts the DC to an output AC, and the frequency and voltage of the output AC are adjustable; and
The connection module comprises the first AC-DC-AC converter of an N^{th} frequency conversion access system, the first AC-DC-AC converter of the N^{th} frequency conversion access system converts an input AC to a DC and then converts the DC to an output AC, and frequency and voltage of the input and output AC are adjustable;
Wherein, the control method of the flexible access substation comprises: when the first AC-DC-AC converter of the N^{th} frequency conversion access system fails, stopping output of the first AC-DC-AC converter, and switching the first AC-DC-AC converters of the (N-1)^{th} frequency conversion system and/or the (N+1)^{th} frequency conversion system from power control to voltage control to control a voltage of the AC bus of the N^{th} frequency conversion access system.

The application further provides another control method of a flexible access substation. The flexible access substation comprises N sets of frequency conversion access systems, N is an integer greater than or equal to 1, each of the N sets of frequency conversion access systems comprises a first AC-DC-AC converter, a first output circuit breaker and a first power distribution system, and the first power distribution system comprises an AC incoming line, an AC bus and at least one outgoing line, wherein,
An output side of the first AC-DC-AC converter is connected to one end of the AC incoming line of the first power distribution system by means of the first output circuit breaker;
The other end of the AC incoming line is connected to the AC bus;
One end of each outgoing line is connected to the AC bus, another end of each outgoing line is connected to one end of an outgoing circuit breaker, and another end of the outgoing circuit breaker is led out and defined as an outgoing terminal;
An input side of the first AC-DC-AC convert is connected to a superior power grid; and
The first AC-DC-AC convert converts an input AC to a DC, and then converts the DC to an output AC, and the frequency and voltage of the output AC are adjustable;
Wherein, the control method of the flexible access substation comprises: when reverse power is detected, feeding the reverse power back to the superior power grid by means of the first AC-DC-AC converters of the frequency conversion access systems.

The application further provides yet another control method of a flexible access substation. The flexible access substation comprises N sets of frequency conversion access systems, N is an integer greater than or equal to 1, each of the N sets of frequency conversion access systems comprises a first AC-DC-AC converter, a first output circuit breaker and a first power distribution system, and the first power distribution system comprises an AC incoming line, an AC bus and at least one outgoing line, wherein,
An output side of the first AC-DC-AC converter is connected to one end of the AC incoming line of the first power distribution system by means of the first output circuit breaker;
Another end of the AC incoming line is connected to the AC bus;
One end of each outgoing line is connected to the AC bus, another end of each outgoing line is connected to one end of an outgoing circuit breaker, and another end of the outgoing circuit breaker is led out and defined as an outgoing terminal;
An input side of the first AC-DC-AC convert is connected to a superior power grid;
The first AC-DC-AC convert converts an input AC to a DC, and then converts the DC to an output AC, and the frequency and voltage of the output AC are adjustable; and
Positive and negative poles of a DC side of the first AC-DC-AC converter are led out and connected to a DC distribution network, and the DC distribution network comprises a DC circuit breaker, a DC transformer, and a DC load, a power supply or a vessel;

Wherein. the control method of the flexible access substation comprises: when reverse power is detected, feeding the reverse power back to the superior power grid or the DC distribution network connected to the DC sides of the first AC-DC-AC converters by means of the first AC-DC-AC converters of the frequency conversion access system.
The application further provides another control method of a flexible access substation. The flexible access substation comprises N sets of frequency conversion access systems, N is an integer greater than or equal to 1, each of the N sets of frequency conversion access systems comprises a first AC-DC-AC converter, a first output circuit breaker and a first power distribution system, and the first power distribution system comprises an AC incoming line, an AC bus and at least one outgoing line, wherein,
An output side of the first AC-DC-AC converter is connected to one end of the AC incoming line of the first power distribution system by means of the first output circuit breaker;
Another end of the AC incoming line is connected to the AC bus;
One end of each outgoing line is connected to the AC bus, another end of each outgoing line is connected to one end of an outgoing circuit breaker, and another end of the outgoing circuit breaker is led out and defined as an outgoing terminal;
An input side of the first AC-DC-AC convert is connected to a superior power grid;
The first AC-DC-AC convert converts an input AC to a DC, and then converts the DC to an output AC, and the frequency and voltage of the output AC are adjustable; and
The outgoing terminal is connected to a vessel, and the outgoing circuit breaker is equipped with a synchronizing device;
Wherein, the control method of the flexible access substation comprises:
   Step 1, when a first vessel docks and accesses shore power, starting the first AC-DC-AC converter to electrify the AC bus, controlling the voltage of the AC bus to be stable, and setting output frequency of the first AC-DC-AC converter to f1;
   Step 2, completing connection between a vessel cable and the shore outgoing terminal;
   Step 3, after confirming that connection is completed, tracking power frequency of the first vessel and automatically adjusting output frequency of the first AC-DC-AC converter to f1+δf, and detecting, by the synchronizing device corresponding to the outgoing line, voltages on both sides of the outgoing circuit breaker, wherein 8f is frequency deviation;
   Step 4, when closing conditions are met, closing the outgoing circuit breaker, or performing synchronous closing by a vessel side;
   Step 5, switching a control strategy of the first AC-DC-AC converter so that a power supply of vessel loads is gradually switched to the first AC-DC-AC converter;
   Step 6, completing the shore power access of the first vessel, so as to change from a power supply loaded state before the connection to a pure load state; and
   Step 7, when other vessels dock and access the shore power, connecting the AC bus of the frequency conversion access system according to step 2 to step 6.

Further, the step 5 comprises:
Gradually switching the power supply of the vessel loads to the first AC-DC-AC frequency converter, gradually reducing output of a vessel power generation system to 0 till the vessel power generation system stops, and switching the first AC-DC-AC frequency converter back to a previous control strategy to control the voltage of the AC bus to be stable.
The application further provides another control method of a flexible access substation. The flexible access substation comprises two sets of frequency conversion access systems, each of the two sets of frequency conversion access systems comprises a first AC-DC-AC converter, a first output circuit breaker, a second output circuit breaker and a first power distribution system, and the first power distribution system comprises an AC incoming line, an AC bus and at least one outgoing line, wherein,
An output side of the first AC-DC-AC converter is connected to one end of the AC incoming line of the first power distribution system by means of the first output circuit breaker;
Another end of the AC incoming line is connected to the AC bus;
One end of each outgoing line is connected to the AC bus, another end of each outgoing line is connected to one end of an outgoing circuit breaker, and another end of the outgoing circuit breaker is led out and defined as an outgoing terminal;
An input side of the first AC-DC-AC convert is connected to a superior power grid;
The first AC-DC-AC convert converts an input AC to a DC, and then converts the DC to an output AC, and the frequency and voltage of the output AC are adjustable;
One end of the second output circuit breaker of a first frequency conversion access system is connected to the output side of the first AC-DC-AC converter of the first frequency conversion access system, and another end is connected to the AC bus of a second frequency conversion access system; and
One end of the second output circuit breaker of the second frequency conversion access system is connected to the output side of the first AC-DC-AC converter of the second frequency conversion access system, and another end is connected to the AC bus of the first frequency conversion access system;

Wherein, the control method of the flexible access substation comprises:
Step 1, starting the AC-DC-AC converter of the first frequency conversion access system, setting the output frequency thereof to f1, starting the AC-DC-AC converter of the second frequency conversion access system, and setting the output frequency thereof to f2;
Step 2, closing the first output circuit breaker of the first frequency conversion access system to electrify the AC bus of the first frequency conversion access system, closing the first output circuit breaker of the second frequency conversion access system to electrify the AC bus of the second frequency conversion access system, setting the frequency of the AC bus of the first frequency conversion access system to f1, and setting the frequency of the AC bus of the second frequency conversion access system to f2; and
Step 3, when a vessel is accessed, identifying the frequency f of a vessel system, closing the outgoing circuit breaker connected to the AC bus of the first frequency conversion access system when f is closer to f1, and closing the outgoing circuit breaker connected to the AC bus of the second frequency conversion access system when f is closer to f2.

Further, the control method of the flexible access substation also comprises:
Step 41, if f1 and f2 are different, when the AC-DC-AC converter of the first frequency conversion system or the second frequency conversion access system is overloaded, transferring part of energy to the overloaded bus by means of the AC-DC-AC converter and connection modules of the second frequency conversion system or the first frequency conversion access system.

Further, the control method of the flexible access substation also comprises:
Step 42, if fl and f2 are the same, when the AC-DC-AC converter of the first frequency conversion system or the second frequency conversion access system fails and the bus connected to the failed system loses power, closing the second output circuit breaker of the second frequency conversion system or the first frequency conversion access system, so that the power-off bus is powered again; and
Step 5, separating the outgoing circuit breaker connected to the failed bus, and closing the outgoing circuit breaker connected to the other AC bus, so that the power-off vessel is powered again.

### Brief Description of the Drawings

Fig. 1 illustrates a first embodiment of a flexible access substation of the present application;
Fig. 2 illustrates a second embodiment of a flexible access substation of the present application;
Fig. 3 is illustrates a third embodiment of a flexible access substation of the present application;
Fig. 4 illustrates a fourth embodiment of a flexible access substation of the present application;
Fig. 5 illustrates a fifth embodiment of a flexible access substation of the present application;
Fig. 6 illustrates a first embodiment of an AC-DC-AC converter;
Fig. 7 illustrates a second embodiment of an AC-DC-AC converter;
Fig. 8 illustrates an embodiment in which a connection module is a solid-state switch;
Fig. 9 illustrates an embodiment in which a connection module is a mechanical switch.

Description of reference signs: 1. frequency conversion access system; 2. first AC-DC-AC converter; 3. input transformer; 4. output transformer; 5. first output circuit breaker; 6. AC bus; 7. outgoing circuit breaker; 8. synchronizing device; 9. vessel-shore connection equipment; 10. connection module; 11. input circuit breaker; 12. first power distribution system; 13. second power distribution system; 14. DC circuit breaker; 15. DC transformer; 16. second output circuit breaker.

### Detailed Description of Embodiments

The application will be further explained below with reference to the attached drawings.

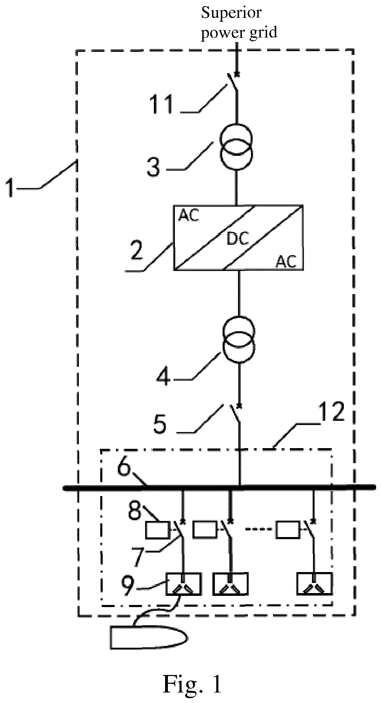

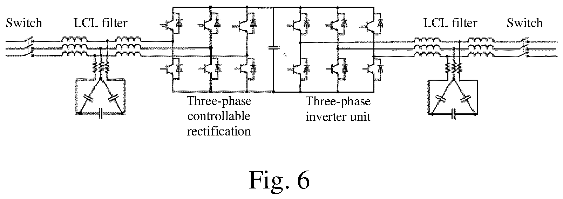

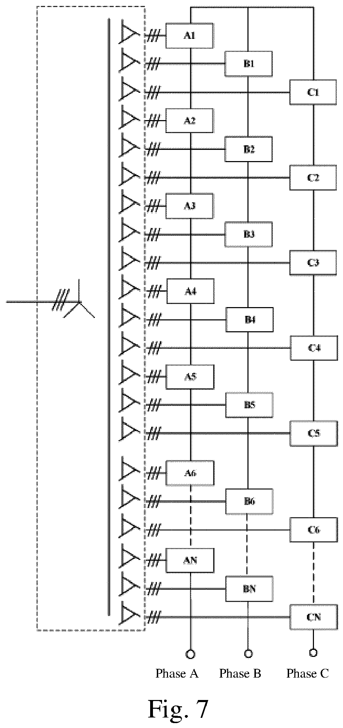

Fig. 1 illustrates a first embodiment of a flexible access substation of the present application. The flexible access substation comprises N sets of frequency conversion access systems 1, wherein N is an integer greater than or equal to 1, and each of the N sets of frequency conversion access systems comprises a first AC-DC-AC converter 2, a first output circuit breaker 5 and a first power distribution system 12; the first power distribution system comprises an AC incoming line, an AC bus 6 and at least one outgoing line, an output side of the first AC-DC-AC converter is connected to one end of the AC incoming line of the first power distribution system by means of the first output circuit breaker, and another end of the AC incoming line is connected to the AC bus; one end of each outgoing line is connected to the AC bus, another end is connected to one end of outgoing circuit breaker, and another end of outgoing circuit breaker is led out and defined as an outgoing terminal; an input side of the first AC-DC-AC convert is connected to a superior power grid; and the first AC-DC-AC convert converts an input AC to a DC, and then converts the DC to an output AC, and the frequency and voltage of the output AC are adjustable. Fig. 6 illustrates a topology embodiment of a low-voltage two-level AC-DC-AC converter, and Fig. 7 illustrates a topology embodiment of a high-voltage multi-level AC-DC-AC converter.

As the flexible access substation provided by the application comprises N sets of frequency conversion access systems, N kinds of voltages with different frequencies can be output according to power supply requirements, so that simultaneous access of vessels with different frequencies can be realized. However, in an one-to-one power supply mode in the prior art, AC-DC-AC converters need to be switched according to the frequency of access to vessels. For example, there are two frequencies required by vessels at present, 50 HZ and 60 HZ, and the existing one-to-one power supply mode cannot realize plug-and-play or simultaneous access of vessels with two kinds of frequencies.

As shown in Fig. 1, N=1, that is, the substation only comprises one frequency conversion access system.

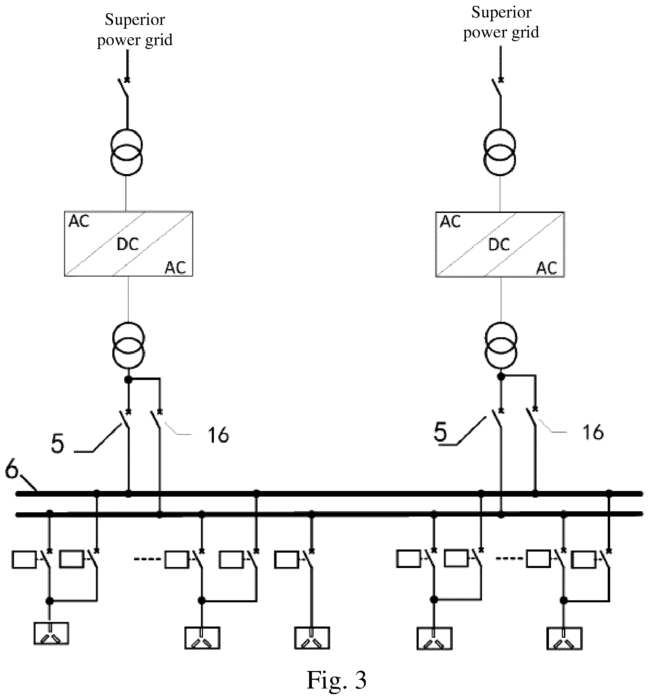

An exemplary embodiment is shown in Fig. 3. In the case that N is equal to 2, the flexible access substation comprises two sets of frequency conversion access systems, which are respectively defined as a first frequency conversion access system and a second frequency conversion access system; each of the first and second frequency conversion access systems comprises a second output circuit breaker 16 respectively, one end of the second output circuit breaker of the first frequency conversion access system is connected to the output side of the first AC-DC-AC converter of the first frequency conversion access system, and another end is connected to the AC bus of the second frequency conversion access system; one end of the second output circuit breaker of the second frequency conversion access system is connected to the output side of the first AC-DC-AC converter of the second frequency conversion access system, and another end is connected to the AC bus of the first frequency conversion access system; and the outgoing terminals of the first frequency conversion access system are connected to the outgoing terminals of the second frequency conversion access system in a one-to-one mode.

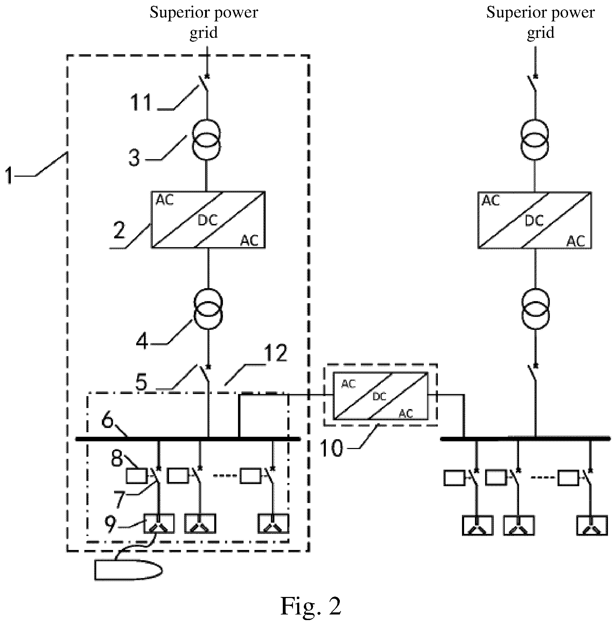

In an exemplary embodiment, in the case that N is an integer greater than or equal to 2, the flexible access substation further comprises N-1 connection modules 10, and the AC buses of the N sets of frequency conversion access systems are connected hand in hand by means of the N-1 connection modules. As shown in Fig. 2, when N=2, the AC buses of the two frequency conversion access systems are connected by one connection module.

In an exemplary embodiment, the connection module is the second AC-DC-AC converter, the second AC-DC-AC converter converts an input AC to a DC and then converts the DC to an output AC, and the frequency and voltage of the input and output AC are adjustable.

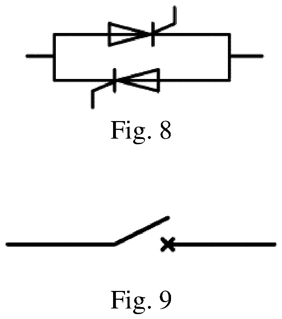

In an exemplary embodiment, the connection module is a solid-state switch composed of power semiconductor devices or a mechanical switch. Fig. 8 illustrates an embodiment of a solid switch composed of anti-parallel thyristors, and Fig. 9 is illustrates embodiment of a mechanical switch.

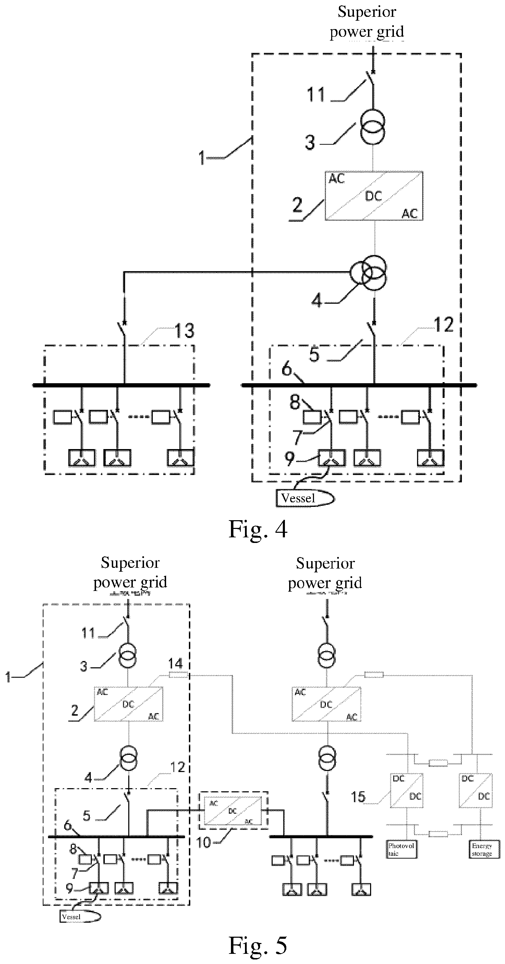

In an exemplary embodiment, the substation further comprises an output transformer, M output circuit breakers and M first power distribution systems, wherein a primary side of the output transformer is connected to an output side of the first AC-DC-AC converter, the output transformer comprises M secondary sides, M is an integer greater than or equal to 1, the M^{th} secondary side is connected to one end of the M^{th} output circuit breaker, and another end of the M^{th} output circuit breaker is connected to an AC incoming line of a corresponding first power distribution system. As shown in Fig. 4, when the substation is used in a shore power system, there are two modes: high voltage boarding and low voltage boarding, M=2, and two sets of secondary windings can be connected to high voltage and low voltage distribution systems by means of two output circuit breakers respectively.

In an exemplary embodiment, positive and negative poles of a DC side of the first AC-DC-AC converter are led out and connected to a DC distribution network, and the DC distribution network comprises a DC circuit breaker, a DC transformer, and a DC load, a power supply or a vessel. As shown in Fig. 5, the DC buses of the first AC-DC-AC converters in the two frequency conversion access systems in this embodiment are led out and connected to DC buses at both ends of the DC distribution network, and the DC distribution network comprises a DC circuit breaker, a DC transformer, an energy storage unit and a photovoltaic power generation unit.

In an exemplary embodiment, the substation further comprises an energy storage unit, and the DC side of the first AC-DC-AC converter is connected to the energy storage unit. In this embodiment, in the case that the first AC-DC-AC converter is the high-voltage multi-level AC-DC-AC converter shown in Fig. 7, the high-voltage multi-level AC-DC-AC converter comprises a plurality of power modules, and a DC side of each power module is connected to the energy storage unit.

In an exemplary embodiment, an input transformer 3 is connected between the first AC-DC-AC converter and the superior power grid.

In an exemplary embodiment, an input circuit breaker 11 is connected between the first AC-DC-AC converter and the superior power grid.

In an exemplary embodiment, in the case that the substation is applied to shore power access of vessels, the outgoing terminal is connected to vessels, and the outgoing terminal can be connected to vessels by means of shore-to-vessel connection equipment 9. The outgoing circuit breaker is also equipped with a synchronizing device 8, which can detect the voltages at both ends of the outgoing circuit breaker and realize synchronous closing.

The application also correspondingly proposes a first specific embodiment of the control method of the flexible access substation, which comprises: in the case that there are more than one set of frequency conversion access system, and the output of the first AC-DC-AC converter of one of the frequency conversion access systems is overloaded, controlling, by the second AC-DC-AC converter, a power direction to flow from the AC bus of an adjacent frequency conversion access system to an overloaded bus. In the prior art, a shore power access system features one-to-one power supply. On the one hand, as the vessel has a large capacity range (100 kW-16 MW), the design of shore power needs to be based on the maximum capacity, and the power load of the vessel itself fluctuates, which makes the shore power system operate at low load for a long time, resulting in low equipment utilization rate and waste of cost; and on another hand, an access power supply of shore power comes from an original wharf distribution system, thus requiring capacity increase of an existing distribution system, and the one-to-one power supply mode requires too much capacity of the distribution system. If there are four 10 MW shore power berths, a total capacity increase of 40 MW is demanded. The existing wharf distribution system may be unable to meet the capacity increase demand due to the limitation of the capacity of a superior power grid, and expansion is needed, which increases the difficulty and cost of capacity increase and transformation. By adopting the flexible access substation provided by the application, the situations of low equipment utilization rate, difficult capacity expansion and the like can be effectively avoided.

When the first AC-DC-AC converter of one of the frequency conversion access systems fails, the output of the first AC-DC-AC converter is stopped, and the second AC-DC-AC converter is switched from power control to voltage control to control the voltage of the AC bus of the frequency conversion access system whose AC-DC-AC converter fails. In the one-to-one power supply mode of the shore power access system in the prior art, important loads of vessels are all supplied with power by a single channel, and the power supply reliability is low. Once the AC-DC-AC converter fails, the loads lose power completely. By adopting the flexible access substation provided by the application, power supply switching of multiple frequency conversion access systems can be realized, so the power supply reliability is obviously improved.

The application also correspondingly proposes a second specific embodiment of the control method of the flexible access substation, which comprises: when reverse power is detected, that is, when the vessel side transmits power to the shore side, feeding the reverse power back to the superior power grid by means of the first AC-DC-AC converter in the frequency conversion access system.

The application also correspondingly proposes a third specific embodiment of the control method of the flexible access substation, which comprises: when reverse power is detected, that is, when the vessel side transmits power to the shore side, feeding the reverse power back to the superior power grid by means of the first AC-DC-AC converter in the frequency conversion access system, or to the DC distribution network connected to the DC side of the first AC-DC-AC converter.

The application also correspondingly proposes a fourth specific embodiment of the control method of the flexible access substation. In the case that the substation described in this application is applied to the shore power access of vessels, the outgoing terminal is connected to the vessels to supply power to loads including a power supply, that is, the power supply on the vessels and vessel loads. In the case that only one frequency conversion access system is provided, the control method comprises:
Step 1, when a first vessel docks and accesses shore power, starting the first AC-DC-AC converter to electrify the AC bus, and controlling the voltage of the AC bus to be stable, and setting the output frequency of the first AC-DC-AC converter to f1;
Step 2, completing the connection between a vessel cable and the shore outgoing terminal or shore-to-vessel connection equipment;
Step 3, after confirming that the connection is completed, tracking the power frequency of the first vessel and automatically adjusting the output frequency of the first AC-DC-AC converter to f1+δf, and detecting, by the synchronizing device corresponding to the outgoing line, the voltages on both sides of the outgoing circuit breaker, wherein 8f is frequency deviation, and in this embodiment, the frequency deviation is less than 0.1 Hz, and grid connection within the allowable frequency deviation can effectively reduce the impact.
Step 4, when closing conditions are met, closing the outgoing circuit breaker, or performing synchronous closing by a vessel side;
Step 5, switching a control strategy of the first AC-DC-AC converter so that a power supply of vessel loads is gradually switched to the first AC-DC-AC converter;
Step 6, completing the shore power access of the first vessel, so as to change from a power supply loaded state before the connection to a pure load state; and
Step 7, when other vessels dock and access to shore power, connecting the AC bus of the frequency conversion access system according to step 2 to step 6.

Specifically, the step 5 comprises: gradually switching the power supply of the vessel loads to the first AC-DC-AC frequency converter, gradually reducing the output of a vessel power generation system to 0 till the vessel power generation system stops, and switching the first AC-DC-AC frequency converter back to a previous control strategy to control the voltage of the AC bus to be stable.

The application also correspondingly proposes a fifth specific embodiment of the control method of the flexible access substation. In the case that the substation comprises two frequency conversion access systems, the control method comprises:
Step 1, starting the AC-DC-AC converter of the first frequency conversion access system, setting the output frequency to f1, starting the AC-DC-AC converter of the second frequency conversion access system, and setting the output frequency to f2;
Step 2, closing the first output circuit breaker of the first frequency conversion access system to electrify the AC bus of the first frequency conversion access system, closing the first output circuit breaker of the second frequency conversion access system to electrify the AC bus of the second frequency conversion access system, and setting the frequency of the AC bus of the first frequency conversion access system to f1 and the frequency of the AC bus of the second frequency conversion access system to f2; and
Step 3, when a vessel is accessed, identifying the frequency f of a vessel system , closing the outgoing circuit breaker connected to the AC bus of the first frequency conversion access system when f is closer to f1, and closing the outgoing circuit breaker connected to the AC bus of the second frequency conversion access system when f is closer to f2,

In this embodiment, f1 and f2 are 50 Hz and 60 Hz respectively, and when the vessel approaches a port, the on/off of the outgoing circuit breaker can be determined by judging the required power frequency of the vessel;
Step 4, if f1 and f2 are different, when the AC-DC-AC converter of one of the frequency conversion access systems is overloaded, transferring part of energy to the overloaded bus by means of the AC-DC-AC converter and connection modules of another frequency conversion access system;
Step 5, if f1 and f2 are the same, when the AC-DC-AC converter of one of the frequency conversion access systems fails, the bus connected to the failed system loses power, closing the second output circuit breaker of another frequency conversion access system, so that the power-off bus is powered again; and
Step 6, separating the outgoing circuit breaker connected to the failed bus, and closing the outgoing circuit breaker connected to another AC bus, so that the power-off vessel is powered again.

The application has the following beneficial effects.

According to some embodiments, the application introduces the architecture of the power system substation to the shore power system, and proposes to arrange the AC bus at the output side of the AC-DC-AC converter, the AC bus is connected to multiple outgoing lines, each outgoing line is equipped with an independent outgoing circuit breaker, and the outgoing circuit breaker is equipped with a synchronizing device to solve the impact problem when vessels are merged to the shore power system. In the control method, it is proposed to switch the control strategy to realize load transfer when vessels are accessed. Before vessel access, the vessel power system features a power supply mode of power supply plus load. After access to the shore power system, the vessel power system becomes a pure load, which will not affect the access of following vessels. The method can realize the sequential access of the following vessels, which truly realizes the one-to-many power supply of the shore power AC-DC-AC converter and the plug-and-play access of vessels to the shore power system, and realizes seamless switching without power failures in the process of one-by-one access of vessels. Due to the fluctuation of vessel loads, one AC bus corresponds to multiple outgoing lines, which is beneficial to the improvement of the utilization rate of power supply capacity. Vessel loads at various berths can share electric energy and the converter, which reduces the equipment investment cost of the whole system.

According to some embodiments, the connection modules are arranged between the multiple sets of frequency conversion access systems, and the connection modules can be AC-DC-AC converters or switches. The connection modules can realize interconnection between different AC buses. In the case that the connection modules are AC-DC-AC converters, the power flow direction and magnitude of the AC-DC-AC converters can be adjusted to balance the power output between AC and DC buses. When one converter is overloaded, support can be obtained from other AC buses, so that the utilization rate of converter equipment is further improved. When one converter fails, the converter of the connection module changes the control target, so that uninterrupted power supply can be realized, and the failed bus which loses power is powered again, thus realizing fault ride-through and greatly improving the power supply reliability of the system. The connection module can also be a switch, which can be a solid-state switch or a fast mechanical switch composed of power semiconductor devices. Based on the principle of spare power automatic switching, when one AC bus loses power, the fast switch is quickly closed to realize fault ride-through.

According to some embodiments, the application also provides a solution including two sets of frequency conversion access systems. The first AC-DC-AC converters of the two frequency conversion access systems are connected to the two buses by means of the outgoing circuit breakers respectively to form dual power supply, and the outgoing terminals are powered by the two buses, which greatly improves the power supply reliability. When one bus loses power, uninterrupted power supply can be realized by shifting the switch. Moreover, as there are two different frequencies for shore power loads, that is, 50 HZ/60 HZ, the AC buses of the two converters can be set to different frequencies. After the frequency required by the vessel is identified, it is easy to provide the vessel with a given frequency by shifting the switch.

The above embodiments are only used to illustrate the technical solutions of the application, but not for limitation. Various modifications or changes made with reference to the above embodiments are within the protection scope of the application.

## Claims

1. A flexible access substation, comprising N sets of frequency conversion access systems, N being an integer greater than or equal to 1, each of the N sets of frequency conversion access systems comprising a first AC-DC-AC converter, a first output circuit breaker and a first power distribution system, and the first power distribution system comprising an AC incoming line, an AC bus and at least one outgoing line, wherein
an output side of the first AC-DC-AC converter is connected to one end of the AC incoming line of the first power distribution system by means of the first output circuit breaker;
another end of the AC incoming line is connected to the AC bus;
one end of each outgoing line is connected to the AC bus, another end of each outgoing line is connected to one end of an outgoing circuit breaker, and another end of the outgoing circuit breaker is led out and defined as an outgoing terminal;
an input side of the first AC-DC-AC convert is connected to a superior power grid; and
the first AC-DC-AC convert converts an input AC to a DC, and then converts the DC to an output AC, and frequency and voltage of the output AC are adjustable.

2. The flexible access substation according to claim 1, wherein the frequency conversion access system comprises one first AC-DC-AC converter, one output transformer, M output circuit breakers and M first power distribution systems, a primary side of the output transformer is connected to an output side of the first AC-DC-AC converter, the output transformer comprises M secondary sides, M is an integer greater than or equal to 1, an M^{th} secondary side is connected to one end of an M^{th} output circuit breaker, and another end of the M^{th} output circuit breaker is connected to an AC incoming line of a corresponding first power distribution system.

3. The flexible access substation according to claim 1 or 2, wherein positive and negative poles of a DC side of the first AC-DC-AC converter are led out and connected to a DC distribution network, and the DC distribution network comprises a DC circuit breaker, a DC transformer, and a DC load, a power supply or a vessel.

4. The flexible access substation according to any one of claims 1-3, wherein the frequency conversion access system further comprises an energy storage unit, and a DC side of the first AC-DC-AC converter is connected to the energy storage unit.

5. The flexible access substation according to any one of claims 1-4, wherein an input transformer is connected between the first AC-DC-AC converter and the superior power grid.

6. The flexible access substation according to any one of claims 1-5, wherein an input circuit breaker is connected between the first AC-DC-AC converter and the superior power grid.

7. The flexible access substation according to any one of claims 1-6, wherein the outgoing terminal is connected to a vessel, and the outgoing circuit breaker is equipped with a synchronizing device.

8. The flexible access substation according to any one of claims 1-7, wherein N is equal to 2, each of the first frequency conversion access system and the second frequency conversion access system comprises a second output circuit breaker, the second output circuit breaker of the first frequency conversion access system has one end connected to the output side of the first AC-DC-AC converter of the first frequency conversion access system and another end connected to the AC bus of the second frequency conversion access system; and the second output circuit breaker of the second frequency conversion access system has one end connected to the output side of the first AC-DC-AC converter of the second frequency conversion access system and another end connected to the AC bus of the first frequency conversion access system.

9. The flexible access substation according to any one of claims 1-7, wherein N is an integer greater than or equal to 2, the flexible access substation further comprises N-1 connection modules, and the AC buses of the N sets of frequency conversion access systems are connected hand in hand by means of the N-1 connection modules.

10. The flexible access substation according to claim 9, wherein the connection module comprises the first AC-DC-AC converter of an N^{th} frequency conversion access system, the first AC-DC-AC converter of the N^{th} frequency conversion access system converts an input AC to a DC and then converts the DC to an output AC, and frequency and voltage of the input and output AC are adjustable.

11. The flexible access substation according to claim 9, wherein the connection module comprises a solid-state switch composed of power semiconductor devices or a mechanical switch.

12. A control method of a flexible access substation, the flexible access substation comprising N sets of frequency conversion access systems, N being an integer greater than or equal to 2, each of the N sets of frequency conversion access systems comprising a first AC-DC-AC converter, a first output circuit breaker, a first power distribution system and N-1 connection modules, the first power distribution system comprising an AC incoming line, an AC bus and at least one outgoing line, and the AC buses of the N sets of frequency conversion access systems being connected hand in hand by means of the N-1 connection modules, wherein
an output side of the first AC-DC-AC converter is connected to one end of the AC incoming line of the first power distribution system by means of the first output circuit breaker;
another end of the AC incoming line is connected to the AC bus;
one end of each outgoing line is connected to the AC bus, another end of each outgoing line is connected to one end of an outgoing circuit breaker, and another end of the outgoing circuit breaker is led out and defined as an outgoing terminal;
an input side of the first AC-DC-AC convert is connected to a superior power grid;
the first AC-DC-AC convert converts an input AC to a DC, and then converts the DC to an output AC, and frequency and voltage of the output AC are adjustable;
the connection module comprises the first AC-DC-AC converter of an N^{th} frequency conversion access system, the first AC-DC-AC converter of the N^{th} frequency conversion access system converts an input AC to a DC and then converts the DC to an output AC, and frequency and voltage of the input and output AC are adjustable; and
wherein the control method of the flexible access substation comprises:
when output of the first AC-DC-AC converter of the N^{th} frequency conversion access system is overloaded, controlling, by the AC-DC-AC converters of the (N-1)^{th} frequency conversion system and/or the (N+1)^{th} frequency conversion system, a power direction to flow from the AC bus of an adjacent frequency conversion access system to an overloaded bus.

13. A control method of a flexible access substation, the flexible access substation comprising N sets of frequency conversion access systems, N being an integer greater than or equal to 2, each of the N sets of frequency conversion access systems comprising a first AC-DC-AC converter, a first output circuit breaker, a first power distribution system and N-1 connection modules, the first power distribution system comprising an AC incoming line, an AC bus and at least one outgoing line, and the AC buses of the N sets of frequency conversion access systems being connected hand in hand by means of the N-1 connection modules, wherein
an output side of the first AC-DC-AC converter is connected to one end of the AC incoming line of the first power distribution system by means of the first output circuit breaker;
another end of the AC incoming line is connected to the AC bus;
one end of each outgoing line is connected to the AC bus, another end of each outgoing line is connected to one end of an outgoing circuit breaker, and another end of the outgoing circuit breaker is led out and defined as an outgoing terminal;
an input side of the first AC-DC-AC convert is connected to a superior power grid;
the first AC-DC-AC convert converts an input AC to a DC, and then converts the DC to an output AC, and frequency and voltage of the output AC are adjustable;
the connection module comprises the first AC-DC-AC converter of an N^{th} frequency conversion access system, the first AC-DC-AC converter of the N^{th} frequency conversion access system converts an input AC to a DC and then converts the DC to an output AC, and frequency and voltage of the input and output AC are adjustable; and
wherein the control method of the flexible access substation comprises:
when the first AC-DC-AC converter of the N^{th} frequency conversion access system fails, stopping output of the first AC-DC-AC converter, and switching the first AC-DC-AC converters of the (N-1)^{th} frequency conversion system and/or the (N+1)^{th} frequency conversion system from power control to voltage control to control a voltage of the AC bus of the N^{th} frequency conversion access system.

14. A control method of a flexible access substation, the flexible access substation comprising N sets of frequency conversion access systems, N being an integer greater than or equal to 1, each of the N sets of frequency conversion access systems comprising a first AC-DC-AC converter, a first output circuit breaker and a first power distribution system, and the first power distribution system comprising an AC incoming line, an AC bus and at least one outgoing line, wherein
an output side of the first AC-DC-AC converter is connected to one end of the AC incoming line of the first power distribution system by means of the first output circuit breaker;
another end of the AC incoming line is connected to the AC bus;
one end of each outgoing line is connected to the AC bus, another end of each outgoing line is connected to one end of an outgoing circuit breaker, and another end of the outgoing circuit breaker is led out and defined as an outgoing terminal;
an input side of the first AC-DC-AC convert is connected to a superior power grid;
the first AC-DC-AC convert converts an input AC to a DC, and then converts the DC to an output AC, and frequency and voltage of the output AC are adjustable; and
wherein the control method of the flexible access substation comprises:
when reverse power is detected, feeding the reverse power back to the superior power grid by means of the first AC-DC-AC converters of the frequency conversion access systems.

15. A control method of a flexible access substation, the flexible access substation comprising N sets of frequency conversion access systems, N being an integer greater than or equal to 1, each of the N sets frequency conversion access systems comprising a first AC-DC-AC converter, a first output circuit breaker and a first power distribution system, and the first power distribution system comprising an AC incoming line, an AC bus and at least one outgoing line, wherein
an output side of the first AC-DC-AC converter is connected to one end of the AC incoming line of the first power distribution system by means of the first output circuit breaker;
another end of the AC incoming line is connected to the AC bus;
one end of each outgoing line is connected to the AC bus, another end of each outgoing line is connected to one end of an outgoing circuit breaker, and another end of the outgoing circuit breaker is led out and defined as an outgoing terminal;
an input side of the first AC-DC-AC convert is connected to a superior power grid;
the first AC-DC-AC convert converts an input AC to a DC, and then converts the DC to an output AC, and frequency and voltage of the output AC are adjustable;
positive and negative poles of a DC side of the first AC-DC-AC converter are led out and connected to a DC distribution network, and the DC distribution network comprises a DC circuit breaker, a DC transformer, and a DC load, a power supply or a vessel; and
wherein the control method of the flexible access substation comprises:
when reverse power is detected, feeding the reverse power back to the superior power grid or the DC distribution network connected to the DC sides of the first AC-DC-AC converters by means of the first AC-DC-AC converters of the frequency conversion access systems.

16. A control method of a flexible access substation, the flexible access substation comprising N sets of frequency conversion access systems, N being an integer greater than or equal to 1, each of the N sets of frequency conversion access systems comprising a first AC-DC-AC converter, a first output circuit breaker and a first power distribution system, and the first power distribution system comprising an AC incoming line, an AC bus and at least one outgoing line, wherein
an output side of the first AC-DC-AC converter is connected to one end of the AC incoming line of the first power distribution system by means of the first output circuit breaker;
another end of the AC incoming line is connected to the AC bus;
one end of each outgoing line is connected to the AC bus, another end of each outgoing line is connected to one end of an outgoing circuit breaker, and another end of the outgoing circuit breaker is led out and defined as an outgoing terminal;
an input side of the first AC-DC-AC convert is connected to a superior power grid;
the first AC-DC-AC convert converts an input AC to a DC, and then converts the DC to an output AC, and frequency and voltage of the output AC are adjustable;
the outgoing terminal is connected to a vessel, and the outgoing circuit breaker is equipped with a synchronizing device; and
wherein the control method of the flexible access substation comprises:
step 1, when a first vessel docks and accesses shore power, starting the first AC-DC-AC converter to electrify the AC bus, controlling voltage of the AC bus to be stable, and setting output frequency of the first AC-DC-AC converter to f1;
step 2, completing connection between a vessel cable and the shore outgoing terminal;
step 3, after confirming that connection is completed, tracking power frequency of the first vessel and automatically adjusting output frequency of the first AC-DC-AC converter to f1+δf, and detecting, by the synchronizing device corresponding to the outgoing line, voltages on both sides of the outgoing circuit breaker, wherein δf is frequency deviation;
step 4, when closing conditions are met, closing the outgoing circuit breaker, or performing synchronous closing by a vessel side;
step 5, switching a control strategy of the first AC-DC-AC converter so that a power supply of vessel loads is gradually switched to the first AC-DC-AC converter;
step 6, completing the shore power connection of the first vessel, so as to change from a power supply loaded state before the connection to a pure load state; and
step 7, when other vessels dock and access to shore power, connecting the AC bus of the frequency conversion access system according to step 2 to step 6.

17. The control method of the flexible access substation according to claim 16, wherein the step 5 comprises:
gradually switching the power supply of the vessel loads to the first AC-DC-AC frequency converter, gradually reducing output of a vessel power generation system to 0 till the vessel power generation system stops, and switching the first AC-DC-AC frequency converter back to a previous control strategy to control the voltage of the AC bus to be stable.

18. A control method of a flexible access substation, the flexible access substation comprising two sets of frequency conversion access systems, each of the two sets of frequency conversion access systems comprising a first AC-DC-AC converter, a first output circuit breaker, a second output circuit breaker and a first power distribution system, and the first power distribution system comprising an AC incoming line, an AC bus and at least one outgoing line, wherein
an output side of the first AC-DC-AC converter is connected to one end of the AC incoming line of the first power distribution system by means of the first output circuit breaker;
another end of the AC incoming line is connected to the AC bus;
one end of each outgoing line is connected to the AC bus, another end of each outgoing line is connected to one end of an outgoing circuit breaker, and another end of the outgoing circuit breaker is led out and defined as an outgoing terminal;
an input side of the first AC-DC-AC convert is connected to a superior power grid;
the first AC-DC-AC convert converts an input AC to a DC, and then converts the DC to an output AC, and frequency and voltage of the output AC are adjustable;
the second output circuit breaker of a first frequency conversion access system has one end connected to the output side of the first AC-DC-AC converter of the first frequency conversion access system and another end connected to the AC bus of a second frequency conversion access system;
the second output circuit breaker of the second frequency conversion access system has one end connected to the output side of the first AC-DC-AC converter of the second frequency conversion access system and another end connected to the AC bus of the first frequency conversion access system; and
wherein the control method of the flexible access substation comprises:
step 1, starting the AC-DC-AC converter of the first frequency conversion access system, setting the output frequency thereof to f1, starting the AC-DC-AC converter of the second frequency conversion access system, and setting the output frequency thereof to f2;
step 2, closing the first output circuit breaker of the first frequency conversion access system to electrify the AC bus of the first frequency conversion access system, closing the first output circuit breaker of the second frequency conversion access system to electrify the AC bus of the second frequency conversion access system, setting the frequency of the AC bus of the first frequency conversion access system to f1, and setting the frequency of the AC bus of the second frequency conversion access system to f2; and
step 3, when a vessel is accessed, identifying a frequency f of a vessel system, closing the outgoing circuit breaker connected to the AC bus of the first frequency conversion access system when f is closer to f1, and closing the outgoing circuit breaker connected to the AC bus of the second frequency conversion access system when f is closer to f2.

19. The control method of the flexible access substation according to claim 18, wherein the control method further comprises:
step 41, if f1 and f2 are different, when the AC-DC-AC converter of the first frequency conversion system or the second frequency conversion access system is overloaded, transferring part of energy to the overloaded bus by means of the AC-DC-AC converter and connection modules of the second frequency conversion system or the first frequency conversion access system.

20. The control method of the flexible access substation according to claim 18, wherein the control method further comprises:
step 42, if f1 and f2 are the same, when the AC-DC-AC converter of the first frequency conversion system or the second frequency conversion access system fails and the bus connected to the failed system loses power, closing the second output circuit breaker of the second frequency conversion system or the first frequency conversion access system, so that the power-off bus is powered again; and
step 5, separating the outgoing circuit breaker connected to the failed bus, and closing the outgoing circuit breaker connected to another AC bus, so that the power-off vessel is powered again.
